# EUROPEAN PATENT SPECIFICATION

(11) **EP 0 836 979 B1**
(45) Date of publication and mention of the grant of the patent: **17.09.2003**
(21) Application number: 97307755.5
(22) Date of filing: 01.10.1997
(51) Int. Cl.: B62B 9/18

(54) **Suspension assembly for wheeled conveyance**
Aufhängungssetzung für Transportmittel mit Rädern
Montage de suspension pour moyen de transport à roues

(30) Priority: 15.10.1996 GB 9621453
(43) Date of publication of application: 22.04.1998
(73) Proprietor: Mills, Christopher James, Little Witley, Worcestershire WR6 6LS (GB)
(72) Inventor: Mills, Christopher James, Little Witley, Worcestershire WR6 6LS (GB)
(74) Representative: Jackson, Derek Charles

(56) References cited:
- CH-A- 239 661
- DE-A- 3 526 264
- DE-U- 9 304 945
- FR-A- 558 228
- GB-A- 2 266 077

## Description

The present invention relates to a suspension assembly for a wheeled conveyance, for example for improving the characteristics of the suspension assembly when the conveyance is stationary or travelling over a relatively even surface.

Wheeled conveyances, such as pushchairs, for use on rough ground are known, for example from GB-A-2 266 077, according to which spring means is used to urge the free ends of forwardly and rearwardly extending suspension arms towards each other, wheels for the conveyance being provided at the free ends of the suspension arms.

While such a wheeled conveyance works well when the suspension is in dynamic mode, that is when travelling over rough ground, it is preferable that any slack or lateral movement of the suspension should be eliminated, or at least reduced, when the suspension is in static mode such as when the conveyance is stationary or travelling over a relatively even surface and, especially in the case of a pushchair, when a child is climbing into or out of the conveyance.

It is therefore an object of the present invention to provide a suspension assembly for a wheeled conveyance that eliminates or at least reduces the problems associated with known suspension systems.

According to one aspect of the present invention there is provided a suspension assembly for a wheeled conveyance, the assembly comprising:
suspension arms pivotably mounted on a chassis and extending in forward and rearward directions in the region of opposite sides of the chassis, each suspension arm having a wheel rotatably mounted at the free end thereof;
spring means disposed in the region of each side of the chassis and acting between the forwardly and rearwardly extending suspension arms in such a way that the free ends thereof tend to pivot towards each other; and
means provided for limiting lateral movement of the suspension arms relative to each other;
wherein the limiting means comprises a collet associated with each suspension arm, the collet being adapted to extend axially within the spring means.

Lateral movement of the suspension arms relative to each other in static mode may be limited by providing the spring means in the form of a coil spring and dimensioning the coil spring such that the diameter of the spring is greater than the axial length thereof. Ideally, the spring is formed of a few turns, for example of relatively thick wire. Each end of the spring may be received in a recess provided in the respective suspension arm. Retaining means, such as a bolt, may extend axially within the spring means, the suspension arms being formed with an aperture therethrough for the passage of the retaining means. The aperture through each suspension arm may incorporate a taper extending in a single direction such that the aperture at the opposing faces of each of the suspension arms is of greater area than at the remote faces thereof.

Each collet may incorporate a peripheral shoulder for supporting the spring means thereon. Retaining means, such as a bolt, may extend axially through the spring means and the collets, the collets being formed with an aperture therethrough for the passage of the retaining means. The aperture through each collet may incorporate a taper extending in a single direction such that the aperture at opposing faces of each of the collets is of greater area than at the remote faces thereof. The taper in each of the collets may extend in the same direction.

As a further option, lateral movement of the arms relative to each other in static mode may be limited by additionally restricting movement of the suspension arms towards and/or away from each other. The limiting means may be releasable to permit the suspension assembly to be adapted to different terrain. Means is generally provided to prevent the suspension arms moving away from each other beyond a predetermined extent. If desired, a substantially rigid member may be introduced, for example in a removable manner, between the suspension arms to limit movement of the suspension arms towards each other. In another embodiment, the suspension arms may be provided with overlapping plates which may be releasably secured together, for example by means of pin means or by caliper means. At least one of the overlapping plates may be provided with a friction surface or with interlocking means, such as teeth or ridges.

For a better understanding of the present invention and to show more clearly how it may be carried into effect reference will now be made, by way of example, to the accompanying drawings in which:
Figure 1 is a side elevational view in diagrammatic form of the general arrangement of one embodiment of a wheeled conveyance in the form of a child's buggy incorporating the present invention;
Figure 2 is a front view of the buggy shown in Figure 1, with the seat being removed for clarity;
Figure 3 is a rear view of the buggy shown in Figures 1 and 2;
Figure 4 is a cross-sectional view through one embodiment of a suspension assembly according to the present invention incorporated into a child's buggy;
Figure 5 is a cross-sectional view through another embodiment of a suspension assembly according to the present invention incorporated into a child's buggy;
Figure 6 is a plan view of part of the suspension assembly of Figure 5 taken in the direction of the arrow shown in Figure 5;
Figure 7 is a side elevational view of means for locking-up the suspension when travelling over an even surface;
Figure 8 is an end elevational view of alternative means for locking-up the suspension when travelling over an even surface; and
Figure 9 is an end elevational view of further alternative means for locking-up the suspension when travelling over an even surface.

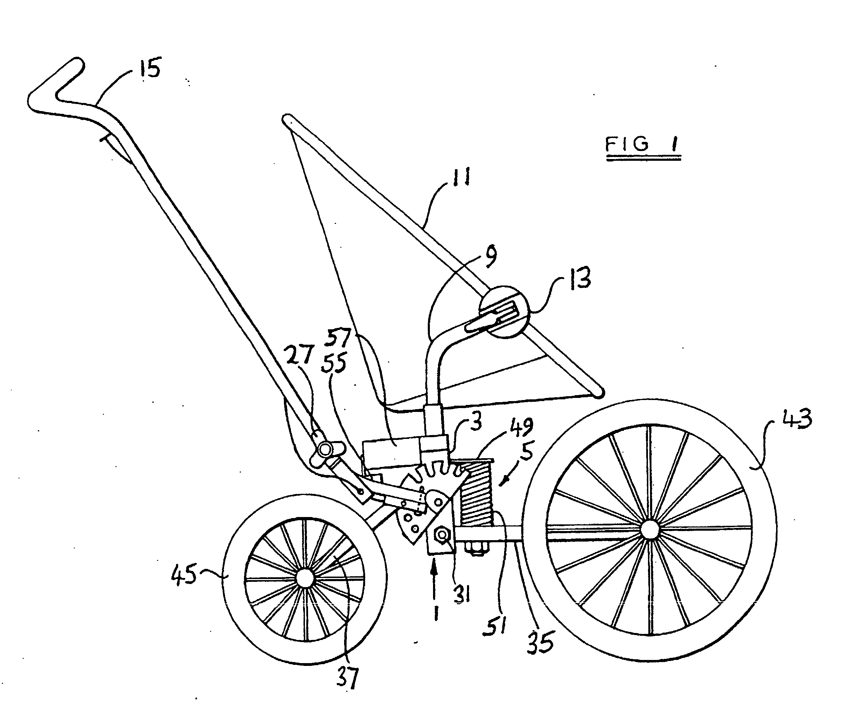

Figures 1, 2 and 3 show a wheeled conveyance incorporating a suspension assembly according to the present invention, the conveyance being in the form of a child's buggy.

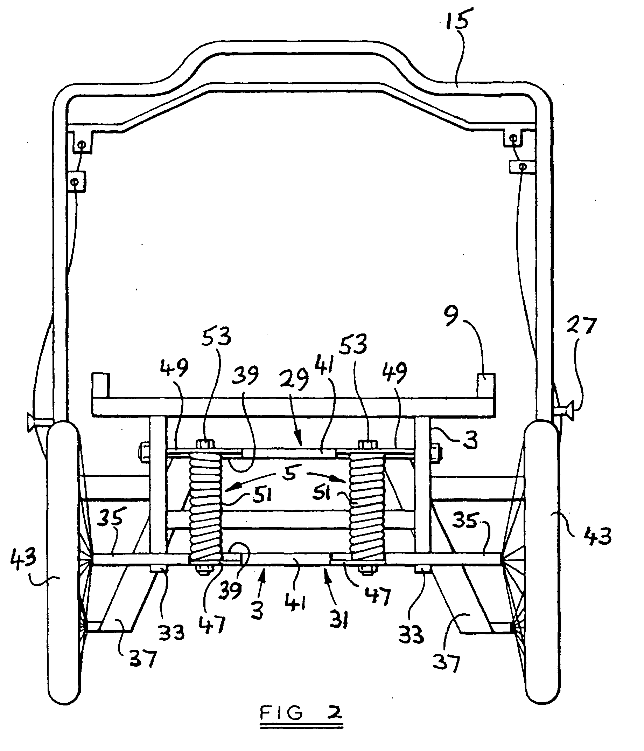

The buggy shown in Figures 1, 2 and 3 comprises a chassis 1 including an upright rectangular frame 3 made from, for example, square section steel or aluminium tube, cast aluminium or plastics material, and a suspension assembly 5 mounted on the chassis. Mounted on the chassis 1, by way of laterally extending arms 7 and upright tubular elements 9, is a support means for a load in the form of a seat 11 which is adjustable for example by way of adjusting clips 13, and which can be removed, for example as illustrated in Figure 2. If desired, the seat can be adjustable forwards and backwards so as to maintain the centre of gravity of the load, such as a child, over the upright frame 3 in order to balance the load and the suspension.

As shown in Figures 1, 2 and 3, a handle 15 is mounted on the chassis 1 by way of laterally extending tubular arms 7. The upper part of the handle 15 is removably attached to the lower part, for example by way of a threaded stud and a removable knob 27. As a further possibility (not shown), the handle 15 can be adjustable for length to make a more comfortable relationship to the user on varying slopes particularly when descending.

The suspension assembly includes two round shafts 29, 31 extending across the frame 3, in this case an upper shaft 29 arranged between the upper and lower cross members of the frame and a lower shaft 31 mounted on downwardly extending arms 33 protruding from the lower part of the frame. Each shaft 29, 31 carries two suspension arms, with suspension arms 35 extending forwardly from the lower shaft 31 and suspension arms 37 extending rearwardly and downwardly from the upper shaft 29. I have found that substantially horizontal forward suspension arms 35 give optimum performance in terms of permitting the buggy to mount obstacles. The upright frame 3 of the chassis of the buggy shown in Figures 1, 2 and 3 permits the forward suspension arms 35 to be positioned substantially horizontally. To permit the frame 3 to have relatively small dimensions, while maintaining considerable stability for the buggy, the suspension arms 35, 37 are inclined laterally outwardly from the frame 3.

The suspension arms 35, 37 are mounted on the lower and upper shafts 31 and 29, respectively, by way of a tube 39 secured to each suspension arm and extending over the respective shaft. The tubes 39 are maintained in position along the shafts 29, 31 by engagement with the frame 3 and by means of a tubular spacer 41, which may be part of the tube 39, extending between the tubes 39 on each of the shafts 29 and 31. A wheel 43, 45 is mounted at the free end of each of the suspension arms 35, 37 respectively. As shown in Figure 1, the wheel 43 on the forwardly extending suspension arm 35 may have a larger diameter than the wheel 45 mounted on the rearwardly extending suspension arm 37. The larger diameter wheel 43 at the front of the buggy assists the buggy in mounting relatively large obstacles, for example up to half the diameter of the wheel in height. Due to the greater effectiveness of the trailing arm, the rear wheels do not require to be of the same diameter in order to provide the same obstacle climbing ability as the front wheels. If desired, the wheels 43 at the front of the buggy may be pivotable about an upright axis to facilitate steering, particularly over even ground. Over rough ground, steering is easily effected by lateral pressure on the handle 15 and means, such as manually operable locking means (not shown), may be provided for inhibiting pivoting of the wheels 43 when the buggy is used over rough ground.

Extending substantially horizontally from each of the tubes 39 is a counter lever 47, 49. The counter levers 47 mounted on the lower suspension arms 35 being positioned so as to be beneath and to face the counter levers 49 mounted on the upper suspension arms 37. In practice, the counter levers 47 are mounted directly on, or can be formed integrally with, the lower suspension arms 35, while the counter levers 49 are mounted generally on the opposite sides of the tubes 39 to the upper suspension arms 37. Thus any upward movement of any of the wheels 43, 45, for example as a result of encountering an obstacle, results in the respective counter levers 47, 49 being urged towards each other and any downward movement of any of the wheels 43, 45 results in the respective counter levers 47, 49 being urged away from each other. Because the suspension arms are independently pivotable on the shafts 29, 31, upward or downward movement of any of the wheels at one side of the buggy does not affect the suspension arms at the other side of the buggy.

The counter levers 47, 49 on each side of the buggy are interconnected by a coil spring 51 which is maintained under compression between the two counter levers 47, 49. The initial degree of compression of the coil spring 51 is determined by a bolt 53 which extends axially through the spring 51 and which also serves to limit the relative movement of the counter levers 47, 49 away from each other. Limitation of movement in this way facilitates tilting of the buggy for mounting an unusually high obstacle and/or for steering and also to reduce suspension movement in the static mode. Additionally, means can be provided for adjusting the free compression length of the springs 51 so as to adjust the suspension for different terrain. For example the free compression length can be reduced and the suspension rendered more firm for use in town or when the buggy is not in motion, and the free compression length can be extended and the suspension rendered less firm for use over rougher terrain.

Thus, if a front wheel 43 at one side of the buggy encounters and rises over an obstacle, the forwardly extending suspension arm moves upwardly and urges the counter lever 47 towards the counter lever 49. This compresses the coil spring 51 which in turn causes the counter lever 49 to move away from the counter lever 47. Since the rear wheel cannot move down, the chassis will ride upwards under the spring force, unless by then the front wheel has cleared the obstacle and can be forced down by the spring. In this way, the short term shock is absorbed in the suspension, or translated into upward movement of the chassis if the wheels cannot immediately return to their original, position. Thus the child's seat may rock from side to side if an obstacle is encountered and sustained at only one side of the buggy, but does not tilt forwards and backwards, resulting in a more comfortable ride for the child. If a rear wheel encounters an obstacle, the spring compresses to absorb the change and then re-extends to raise the seat if the rear wheel cannot immediately fall.

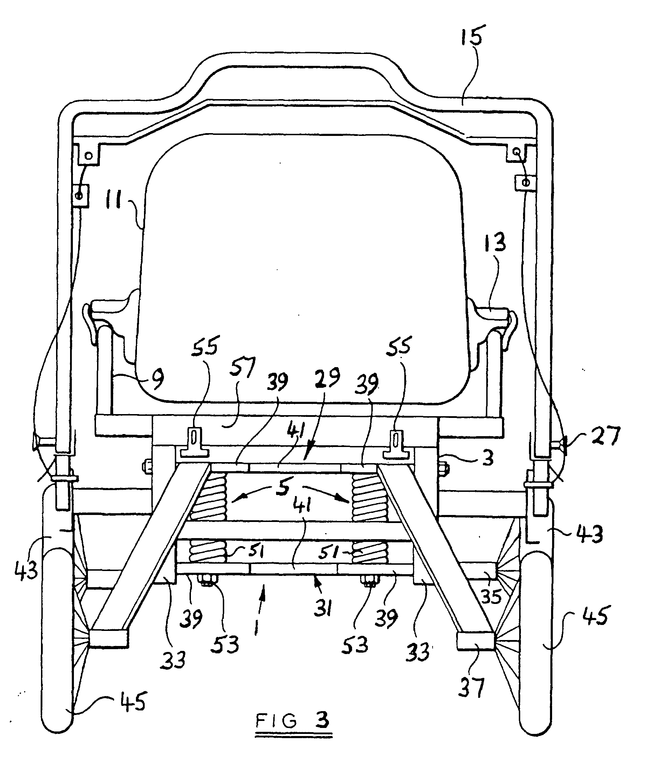

Stop means 55 is mounted on a sub-frame 57 secured to the upper end of frame 3 in order to limit the upward movement of the rearwardly extending suspension arms 37. The stop means 55 is adjustable by the user and may be variable in a number of ways. For example, the stop means may be steplessly adjustable as illustrated in Figure 3, or may have a number, for example two, of predetermined settings such as for use in town or over difficult terrain. Limiting the upward movement of the rearwardly extending suspension arms in this way facilitates tilting of the buggy such as to assist steering or surmounting large obstacles.

Conventionally, a suspension arrangement such as that described in connection with wheeled conveyance according to the present invention would require a damper, or shock absorber, in order to provide an acceptable ride. However, in practice the wheeled conveyance according to the present invention, whether it be a pushchair, wheelchair, wheeled stretcher or other conveyance is adapted to be propelled manually and surprisingly I have found that no additional damping is required because adequate damping is provided through the medium of the person or persons manually propelling the conveyance. Additionally, in practice the softness of the suspension permits the person holding the handle to limit the side-to-side rocking similarly to absorbing the shocks in the suspension.

I have found, however, that to obtain the best effect from a wheeled conveyance according to the present invention, the turning moment exerted on the suspension spring should be substantially the same for both the forwardly and the rearwardly directed suspension arms. In practice, because the counter levers are of substantially the same length, this is accomplished by arranging for the distance from the pivot point of each suspension arm to the point of contact with the ground to be substantially the same. The distance from the pivot point to the point of contact with the ground encompasses, however, numerous design alternatives dependent upon the size of the wheel and the length of the suspension arm, the larger the wheel, the shorter the suspension arm. Surprisingly, I have found that the wheeled conveyance according to the present invention performs best when an obstacle is approached with some determination. Contrary to the performance of conventional buggies, which would stop on encountering an obstacle of any significance, a buggy made in accordance with the present invention rides up and surmounts the obstacle, with the wheels and the suspension absorbing the impact.

Clearly there is substantial opportunity for adapting the form of the wheeled conveyance according to the present invention from those described with reference to the drawings without departing from the scope of the present invention. For example, alternative materials could be used such as plastics or other metals. Other possibilities include incorporating a folding mechanism into the conveyance and introducing means to assist turning the conveyance. It is also possible to replace the frame that forms part of the chassis as described in the embodiments described with reference to the drawings with a single cross member, the shafts being mounted directly or, more likely indirectly, on the cross member and carrying the suspension arms and the counter levers and the like.

I have found that, although the bolt 53 passing through the spring 51 eliminates much of the potential movement of the suspension when the suspension is static due to precompression of the spring, in the absence of any restraining means some lateral movement is possible due to lateral flexing of the spring.

Suitable restraining means is shown in Figures 5 and 6 and involves the provision of collets 59 intermediate each end of the spring 51 and the counter levers 47 and 49. The counter levers in Figures 5 and 6 are each formed with a stepped aperture having a diameter on the external surface thereof greater than the diameter of the bolt 53 and with a diameter on the internal surface thereof (that is, the surface facing the other counter lever) substantially the same as the outer diameter of the spring 51.

Each collet 59 is formed with a stepped outer surface complementary to the shape of the aperture in the counter levers 47 and 49 and may be provided with means (not shown) to inhibit relative rotation between the collets and the counter levers. The collets extend radially inwardly to abut the bolt 53 in a manner that will be described in more detail hereinafter. Additionally, the collets are provided with a peripheral shoulder 61 adapted to receive the end of the spring 51 and peripheral surface 63 extending axially within the spring by a sufficient distance to significantly inhibit lateral movement of the spring. A washer 65 is provided between the external surfaces of the collets and the counter levers and the head or nut of the bolt as appropriate.

The collets 59 are each formed with a generally axially extending aperture 65 adapted to abut at least in part against the generally cylindrical surface of the bolt 53 in order to maintain the bolt substantially perpendicular to both the counter levers in the static position of the suspension, but to allow deflection of the counter levers 47 and 49 when the suspension is in dynamic mode.

Thus, the aperture 65 is substantially circular at the external surface of each collet, but has a diameter somewhat greater than the diameter of the bolt 53 to provide a clearance between at least a part of the bolt and the internal surface of the aperture when the suspension is in static mode. The aperture of each collet is formed with a taper 67 at one side thereof (that is, extending in a single direction) such that the configuration of the internal face of each collet is substantially oval, the collets being positioned such that the tapers face each other.

The clearance at the substantially circular end of the aperture in combination with the taper 67 allows the collets 59 to move towards and away from each other in a pivoting motion without the internal surface of the aperture locking against the external surface of the bolt 53. Thus, the non-tapered side of the aperture substantially inhibits lateral movement of the counter levers 47 and 49 relative to each other in the static mode of the suspension, while the tapered side of the aperture allows the counter levers to pivot relative to each other and therefore to move towards and away from each other (which inevitably involves a degree of tilting of the collets relative to the bolt) without the collets 59 locking against the bolt or otherwise inhibiting the required movement.

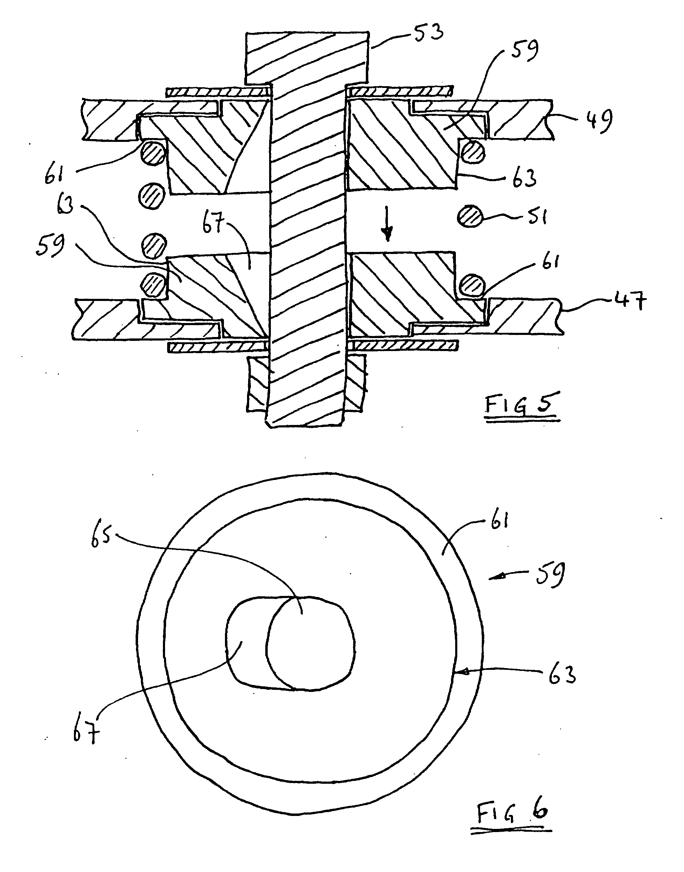

Additional suitable restraining means is shown in Figure 4 and requires an appreciation that the travel required of the spring is relatively short. Thus, the relatively long, small diameter spring 51 of Figures 1 to 3 is replaced in Figure 4.by a relatively short, large diameter spring 69. Thus, as shown in Figure 4, the length of the spring 69 is less than the diameter thereof and the spring can be formed with few turns of relatively thick wire to provide significant resistance to lateral deflection. Each end of the spring 69 is mounted within a recess formed in the respective counter lever 47, 49 and a generally frustoconical tapered aperture is provided where the bolt 53 passes through each counter lever. To facilitate pivoting of the counter levers relative to each other, that part of the aperture having the greater area is in each case on the internal surface of the respective counter lever.

Another approach to the problem of lateral deflection of the spring 51 is simply to additionally provide means for locking-up the suspension when the buggy or other form of conveyance is passing over an even surface so as to render the suspension inactive at such times and aid precise steering, particularly if pivoting front wheels are also incorporated. The locking means may be operated from a switch or lever provided on the handle of the buggy. The switch or lever for operating the locking means may be linked to means as described hereinabove for inhibiting pivoting of the wheels 43 when the buggy is used over rough ground and vice versa. In this way, the suspension can readily be adapted by the person pushing the buggy to suit the requirements of rapidly varying surfaces.

The suspension may be locked-up in a number of ways. For example, a substantially rigid member 71, for example made of or incorporating a hard rubber material or the like, may be introduced between the counter levers 47 and 49 adjacent to the spring 51 as shown in Figure 7. The rigid member 71 inhibits compression of the spring 51, while the bolt 53 inhibits extension of the spring.

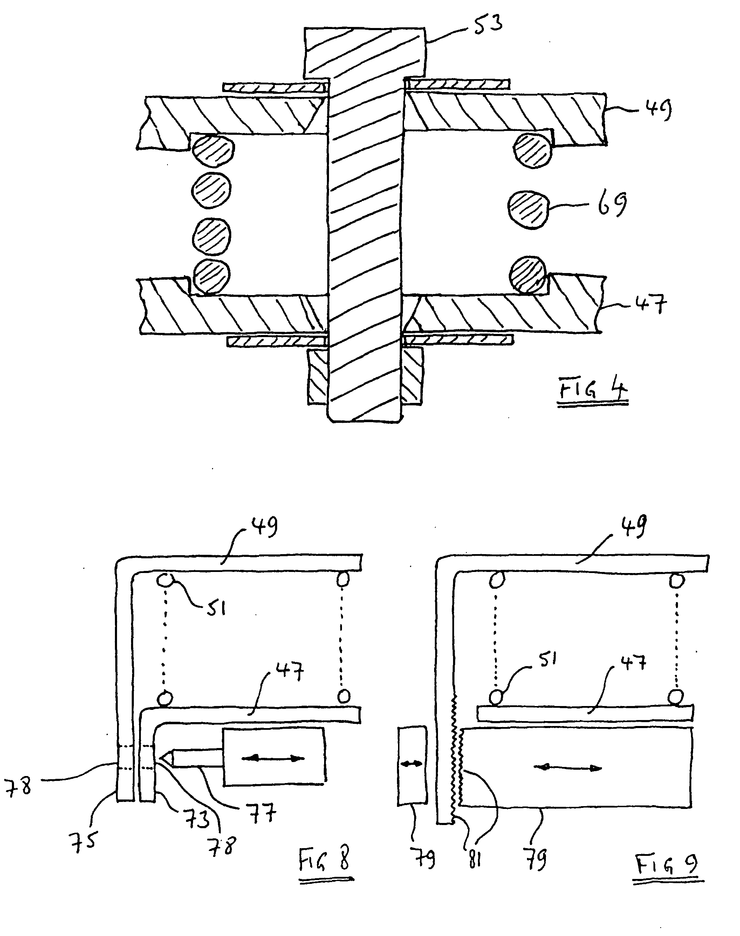

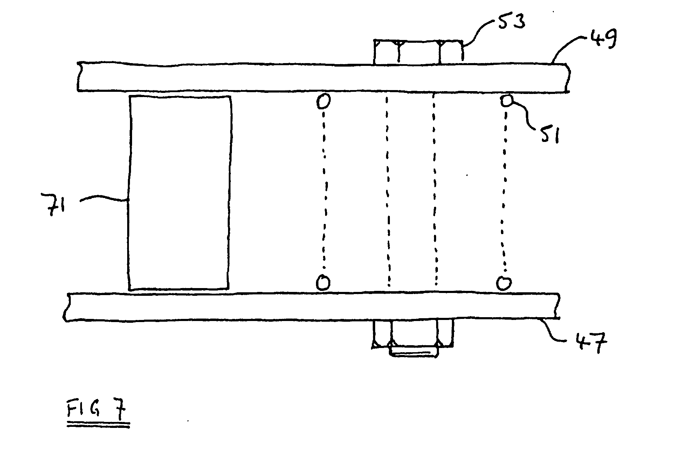

Alternatively, as illustrated in Figure 8, the two counter levers 47 and 49 may be provided with overlapping plates 73 and 75, respectively, which may be prevented from moving relative to each other by passing a pin 77 through apertures 78 in the plates when travelling over an even surface. The pin 77 may be replaced by alternative means for inhibiting relative movement of the plates, such as calipers 79 as shown in Figure 9, and the plates may if desired be provided with co-operating friction surfaces and/or with means such as teeth or ridges 81 to render the plates interlocking as is also shown in Figure 9.

## Claims

1. A suspension assembly for a wheeled conveyance, the assembly comprising:
suspension arms (35, 37) pivotably mounted on a chassis (1) and extending in forward and rearward directions in the region of opposite sides of the chassis, each suspension arm having a wheel (43, 45) rotatably mounted at the free end thereof;
spring means (51) disposed in the region of each side of the chassis and acting between the forwardly and rearwardly extending suspension arms (35, 37) in such a way that the free ends thereof tend to pivot towards each other; and
means provided for limiting lateral movement of the suspension arms (35, 37) relative to each other;
**characterised in that** the limiting means comprises a collet (59) associated with each suspension arm (35, 37), the collet being adapted to extend axially within the spring means (51, 69).

2. A suspension assembly as claimed in claim 1, **characterised in that** lateral movement of the suspension arms (35, 37) relative to each other in static mode is limited by providing the spring means in the form of a coil spring (69) and by dimensioning the coil spring such that the diameter of the spring is greater than the axial length thereof.

3. A suspension assembly as claimed in claim 2, **characterised in that** the spring (69) is formed of a few turns of relatively thick wire.

4. A suspension assembly as claimed in claim 2 or 3, **characterised in that** each end of the spring (69) is received in a recess provided in the respective suspension arm (35, 37).

5. A suspension assembly as claimed in any one of claims 2 to 4, **characterised in that** retaining means extends axially within the spring means (69), the suspension arms (35, 37) being formed with an aperture (65) therethrough for the passage of the retaining means.

6. A suspension assembly as claimed in claim 5, **characterised in that** the aperture (65) through each suspension arm (35, 37) incorporates a taper (67) extending in a single direction such that the aperture at the opposing faces of each of the suspension arms is of greater area than at the remote faces thereof.

7. A suspension assembly as claimed in any preceding claim, **characterised in that** each collet (59) incorporates a peripheral shoulder (61) for supporting the spring means (51, 69) thereon.

8. A suspension assembly as claimed in claim 7, **characterised in that** retaining means extends axially through the spring means (51, 69) and the collets (59), the collets being formed with an aperture (65) therethrough for the passage of the retaining means.

9. A suspension assembly as claimed in claim 8, **characterised in that** the aperture (65) through each collet (59) incorporates a taper (67) extending in a single direction such that the aperture at opposing faces of each of the collets is of greater area than at the remote faces thereof.

10. A suspension assembly as claimed in claim 9, **characterised in that** the taper in each of the collets extends in the same direction.

11. A suspension assembly as claimed in any preceding claim, **characterised in that** lateral movement of the arms (35, 37) relative to each other in static mode is limited by additionally restricting movement of the suspension arms towards and/or away from each other.

12. A suspension assembly as claimed in claim 11, **characterised in that** the limiting means (71; 73, 75, 77; 79) is releasable to permit the suspension assembly to be adapted to different terrain.

## Patentansprüche

1. Aufhängungsbaugruppe für ein berädertes Transportmittel, die Folgendes umfasst:
Aufhängungsstreben (35, 37), die schwenkbar auf einem Fahrgestell (1) montiert sind und in Vor- und Rückwärtsrichtung in der Region von gegenüberliegenden Seiten des Fahrgestells verlaufen, wobei am freien Ende jeder Aufhängungsstrebe ein Rad (43,45) drehbar montiert ist;
Federungsmittel (51) in der Region jeder Seite des Fahrgestells, die zwischen den nach vorne und hinten verlaufenden Aufhängungsstreben (35, 37) auf eine solche Weise wirken, dass die freien Enden davon dazu neigen, zueinander hin zu schwenken; und
Mittel zum Begrenzung von Seitenbewegungen der Aufhängungsstreben (35, 37) relativ zueinander;
**dadurch gekennzeichnet, dass** das Begrenzungsmittel eine Klemmhülse (59) in Verbindung mit jeder Aufhängungsstrebe (35, 37) umfasst, wobei die Klemmhülse so gestaltet ist, dass sie axial innerhalb der Federungsmittel (51, 69) verläuft.

2. Aufhängungsbaugruppe nach Anspruch 1, **dadurch gekennzeichnet, dass** Seitenbewegungen der Aufhängungsstreben (35, 37) relativ zueinander im statischen Modus mit Hilfe der Federungsmittel in der Form einer Spiralfeder (69) und durch Dimensionieren der Spiralfeder so begrenzt wird, dass der Durchmesser der Feder größer ist als ihre axiale Länge.

3. Aufhängungsbaugruppe nach Anspruch 2, **dadurch gekennzeichnet, dass** die Feder (69) aus ein paar Umdrehungen eines relativ dicken Drahtes gebildet ist.

4. Aufhängungsbaugruppe nach Anspruch 2 oder 3, **dadurch gekennzeichnet, dass** jedes Ende der Feder (69) in einer in der jeweiligen Aufhängungsstrebe (35, 37) ausgebildeten Aussparung aufgenommen wird.

5. Aufhängungsbaugruppe nach einem der Ansprüche 2 bis 4, **dadurch gekennzeichnet, dass** Befestigungsmittel axial in den Federungsmitteln (69) verlaufen, wobei die Aufhängungsstreben (35, 37) mit einer durch sie verlaufenden Öffnung (65) für die Passage der Befestigungsmittel ausgebildet sind.

6. Aufhängungsbaugruppe nach Anspruch 5, **dadurch gekennzeichnet, dass** die Öffnung (65) durch jede Aufhängungsstrebe (35, 37) einen in einer einzelnen Richtung verlaufenden Kegel (67) aufweist, so dass die Öffnung an den gegenüberliegenden Flächen jeder der Aufhängungsstreben eine größere Fläche hat als an deren entfernten Seiten.

7. Aufhängungsbaugruppe nach einem der vorherigen Ansprüche, **dadurch gekennzeichnet, dass** jede Klemmhülse (59) einen Ansatz (61) an der Peripherie aufweist, auf dem die Federungsmittel (51, 69) ruhen.

8. Aufhängungsbaugruppe nach Anspruch 7, **dadurch gekennzeichnet, dass** das Befestigungsmittel axial durch die Federungsmittel (51, 69) und die Klemmhülsen (59) verläuft, wobei durch die Klemmhülsen eine Öffnung (65) für die Passage des Befestigungsmittels verläuft.

9. Aufhängungsbaugruppe nach Anspruch 8, **dadurch gekennzeichnet, dass** die Öffnung (65) durch jede Klemmhülse (59) einen Kegel (67) aufweist, der in einer einzelnen Richtung verläuft, so dass die Öffnung an gegenüberliegenden Seiten jeder der Klemmhülsen eine größere Fläche hat als an den entfernten Seiten.

10. Aufhängungsbaugruppe nach Anspruch 9, **dadurch gekennzeichnet, dass** der Kegel in jeder der Klemmhülsen in derselben Richtung verläuft.

11. Aufhängungsbaugruppe nach einem der vorherigen Ansprüche, **dadurch gekennzeichnet, dass** Seitenbewegungen der Streben (35, 37) relativ zueinander im statischen Modus durch zusätzliches Einschränken der Bewegung der Aufhängungsstreben zueinander hin und/oder voneinander weg begrenzt wird.

12. Aufhängungsbaugruppe nach Anspruch 11, **dadurch gekennzeichnet, dass** die Begrenzungsmittel (71; 73, 75, 77; 79) lösbar sind, damit die Aufhängungsbaugruppe an ein anderes Gelände angepasst werden kann.

## Revendications

1. Un ensemble de suspension pour un moyen de transport à roues, l'ensemble comprenant :
des bras de suspension (35, 37) montés de sorte à pouvoir pivoter sur un châssis (1) et qui se prolongent dans les directions avant et arrière dans la région de côtés opposés du châssis, chaque bras de suspension ayant une roue (43, 45) montée de façon rotative à son extrémité libre ;
des moyens formant ressort (51) disposés dans la région de chaque côté du châssis et qui agissent entre les bras de suspension (35, 37) qui se prolongent vers l'avant et l'arrière de sorte que leurs extrémités libres ont tendance à pivoter l'une vers l'autre ; et
des moyens prévus pour limiter le mouvement latéral des bras de suspension (35, 37) relativement l'un à l'autre ;
**caractérisé en ce que** les moyens limiteurs comprennent une douille (59) associée à chaque bras de suspension (35, 37), la douille étant adaptée pour se prolonger axialement à l'intérieur des moyens formant ressort (51, 69).

2. Un ensemble de suspension selon la revendication 1, **caractérisé en ce que** le mouvement latéral des bras de suspension (35, 37) l'un relativement à l'autre en mode statique est limité en prévoyant les moyens formant ressort sous forme d'un ressort à boudin (69) et en dimensionnant ce ressort à boudin de sorte que le diamètre du ressort est plus grand que sa longueur axiale.

3. Un ensemble de suspension selon la revendication 2, **caractérisé en ce que** le ressort (69) est formé en quelques spires d'un fil métallique relativement épais.

4. Un ensemble de suspension selon la revendication 2 ou 3, **caractérisé en ce que** chaque extrémité du ressort (69) est reçue dans un retrait prévu dans le bras de suspension respectif (35, 37).

5. Un ensemble de suspension selon l'une quelconque des revendications 2 à 4, **caractérisé en ce que** des moyens de retenue se prolongent axialement à l'intérieur des moyens formant ressort (69), les bras de suspension (35, 37) étant formés avec une ouverture (65) qui les traverse pour laisser passer les moyens de retenue.

6. Un ensemble de suspension selon la revendication 5, **caractérisé en ce que** l'ouverture (65) qui traverse chaque bras de suspension (35, 37) incorpore une partie effilée (67) qui se prolonge dans une seule direction de sorte que l'ouverture au niveau des faces opposées de chacun des bras de suspension a une superficie plus grande qu'au niveau de leurs faces écartées.

7. Un ensemble de suspension selon l'une quelconque des revendications précédentes, **caractérisé en ce que** chaque douille (59) incorpore un épaulement périphérique (61) pour supporter les moyens formant ressort (51, 69) sur cet épaulement.

8. Un ensemble de suspension selon la revendication 7, **caractérisé en ce que** des moyens de retenue se prolongent axialement à travers les moyens formant ressort (51, 69) et les douilles (59), les douilles étant formées avec une ouverture (65) qui les traverse pour laisser passer les moyens de retenue.

9. Un ensemble de suspension selon la revendication 8, **caractérisé en ce que** l'ouverture (65) qui traverse chaque douille (59) incorpore une partie effilée (67) qui se prolonge dans une seule direction de sorte que l'ouverture au niveau de faces opposées de chacune des douilles a une superficie plus grande qu'au niveau de leurs faces écartées.

10. Un ensemble de suspension selon la revendication 9, **caractérisé en ce que** les parties effilées dans chacune des douilles se prolongent dans la même direction.

11. Un ensemble de suspension selon l'une quelconque des revendications précédentes, **caractérisé en ce que** le mouvement latéral des bras (35, 37) l'un relativement à l'autre en mode statique est limité en restreignant de plus le mouvement des bras de suspension lorsqu'ils se rapprochent et/ou s'écartent l'un de l'autre.

12. Un ensemble de suspension selon la revendication 11, **caractérisé en ce que** les moyens de limitation (71 ; 73, 75, 77 ; 79) sont libérables, ce qui permet d'adapter l'ensemble de suspension en fonction de différents terrains.
